# FASCICULE DE BREVET EUROPEEN

(11) **EP 3 367 148 B1**
(45) Date de publication et mention de la délivrance du brevet: **25.11.2020**
(21) Numéro de dépôt: 18156327.1
(22) Date de dépôt: 12.02.2018
(51) Int. Cl.: G02B 6/42, B60Q 3/62

(54) **MODULE LUMINEUX POUR VÉHICULE AUTOMOBILE**
LEUCHTMODUL FÜR KRAFTFAHRZEUG
LIGHT MODULE FOR A MOTOR VEHICLE

(30) Priorité: 23.02.2017 FR 1751444
(43) Date de publication de la demande: 29.08.2018
(73) Titulaire: Valeo Vision, 93012 Bobigny Cedex (FR)
(72) Inventeur: FLEURENCE, Thierry, 93012 BOBIGNY Cedex (FR); STEFURA, Eric, 93012 BOBIGNY Cedex (FR); LIARD, Laurent, 93012 BOBIGNY Cedex (FR); RASOLDIER, Nirina, 93012 BOBIGNY Cedex (FR); EZZOUAQ, Kaoutar, 93012 BOBIGNY Cedex (FR)
(74) Mandataire: Valeo Vision

(56) Documents cités:
- EP-A2- 1 522 459
- DE-A1-102015 214 364
- US-A1- 2017 023 749

## Description

### DOMAINE TECHNIQUE DE L'INVENTION

La présente invention concerne un module lumineux pour véhicule automobile et un procédé de montage d'un guide de lumière dudit module lumineux sur une platine support dudit module lumineux.

### ARRIÈRE-PLAN TECHNOLOGIQUE DE L'INVENTION

Un module lumineux pour véhicule automobile comprend de manière connue de l'homme du métier :
- une carte à circuit imprimé ;
- une source lumineuse disposée sur ladite carte à circuit imprimé ;
- un module de pilotage de ladite source lumineuse disposé sur ladite carte à circuit imprimé ;
- un guide de lumière adapté pour coopérer avec ladite source lumineuse. La carte à circuit imprimé et les composants qu'elle supporte (source lumineuse, guide de lumière etc.) est disposée dans un boîtier qui la protège contre les poussières.

De tels modules lumineux sont utilisés dans un exemple non limitatif pour un habitacle pour véhicule automobile, par exemple, pour l'éclairage intérieur des portières.

Ainsi, le guide de lumière est adapté pour acheminer un rayonnement lumineux produit par la source lumineuse afin d'éclairer une partie de l'habitacle du véhicule automobile. Le guide de lumière comprend sur une de ses extrémités des contre-formes qui permettent de le fixer audit boîtier de sorte qu'il soit en regard de la source lumineuse.

Un inconvénient de cet état de la technique est que pour la réalisation du guide de lumière, il est nécessaire d'avoir un procédé supplémentaire pour réaliser ces contre-formes, que ce soit par injection ou par extrusion.

EP1522459A décrit un module lumineux pour véhicule automobile avec un guide de lumière bloqué dans un fût de réception par une languette d'ancrage.

Dans ce contexte, la présente invention vise à résoudre l'inconvénient précédemment mentionné.

### DESCRIPTION GENERALE DE L'INVENTION

A cette fin l'invention , telle que définie par les revendications, propose un module lumineux pour véhicule automobile, ledit module lumineux comprenant :
- une platine support ;
- une source lumineuse disposée sur ladite platine support ;
- un module de pilotage de ladite source lumineuse disposé sur ladite platine support ;
- un guide de lumière adapté pour coopérer avec ladite source lumineuse ;
- un fût de réception dudit guide de lumière solidaire de ladite platine support comportant :
   - une première ouverture adaptée pour recevoir ledit guide de lumière ;
   - au moins une lumière adaptée pour recevoir une languette d'ancrage d'une pièce de verrouillage ;
- ladite pièce de verrouillage comportant :
   - un corps principal ;
   - au moins une languette d'ancrage faisant saillie à partir du corps principal et adaptée pour bloquer le guide de lumière dans ledit fût de réception.

Ainsi, comme on va le voir en détail ci-après, grâce au fût de réception, on s'assure que le guide de lumière est bien positionné en regard de la source lumineuse pour un fonctionnement optimal du module lumineux, et grâce à la pièce de verrouillage, on immobilise le guide de lumière dans le fût de réception. Il n'est plus nécessaire d'avoir des contre-formes sur le guide de lumière pour le fixer. On simplifie ainsi la fabrication du guide de lumière.

Selon des modes de réalisation non limitatifs, le module lumineux peut comporter en outre une ou plusieurs caractéristiques supplémentaires parmi les suivantes :
Selon un mode de réalisation non limitatif, le fût de réception comprend une deuxième ouverture par laquelle le guide de lumière débouche de sorte à être en regard de ladite source lumineuse.
Selon un mode de réalisation non limitatif, ledit module lumineux comprend en outre un pontet disposé sur ladite platine support en amont du fût de réception et adapté pour servir d'appui pour ladite pièce de verrouillage.
Selon un mode de réalisation non limitatif, la pièce de verrouillage comprend en outre une patte d'appui adaptée pour s'insérer dans ledit pontet.
Selon un mode de réalisation non limitatif, le fût de réception comprend en outre un épaulement adapté pour arrêter le guide de lumière.
Selon un mode de réalisation non limitatif, la pièce de verrouillage comprend deux languettes d'ancrage disposées en regard l'une de l'autre dans le corps principal.
Selon un mode de réalisation non limitatif, ladite au moins une languette d'ancrage est élastiquement déformable.
Selon un mode de réalisation non limitatif, le fût de réception comprend en outre une pluralité de nervures.
Selon un mode de réalisation non limitatif, la platine support et le fût de réception sont réalisés dans un matériau plastique.
Selon un mode de réalisation non limitatif, la pièce de verrouillage est une pièce métallique.
Selon un mode de réalisation non limitatif, le corps principal de la pièce de verrouillage comprend :
   - une paroi principale adaptée pour venir en butée contre la platine support ; et
   - deux parois secondaires disposées de part et d'autre de la paroi principale et adaptées pour encadrer ladite platine support.
Selon un mode de réalisation non limitatif, les deux parois secondaires du corps principal sont convergentes.
Selon un mode de réalisation non limitatif, les deux parois secondaires se prolongent de part et d'autre de la paroi principale de sorte à recouvrir tout ou partie de ladite platine support.
Selon un mode de réalisation non limitatif, les parois secondaires comprennent des extrémités chanfreinées.
Selon un mode de réalisation non limitatif, la section du corps principal est sensiblement en forme de U ou carrée.
Selon un mode de réalisation non limitatif,
Selon un mode de réalisation non limitatif,
   - ledit corps principal de ladite pièce de verrouillage comprend un orifice ; et
   - ledit fût de réception comprend une butée de verrouillage adaptée pour se loger dans ledit orifice.
Selon un mode de réalisation non limitatif, la source lumineuse est une puce émettrice semi-conductrice.

Il est également proposé un procédé de montage d'un guide de lumière d'un module lumineux pour véhicule automobile sur une platine support, ledit procédé de montage comprenant :
- une insertion par translation d'une partie d'une pièce de verrouillage dans un fût de réception dudit guide de lumière, ledit fût de réception étant solidaire de ladite platine support ;
- une rotation de ladite pièce de verrouillage en direction de ladite platine support.

Selon un mode de réalisation non limitatif,
- ladite insertion par translation comprend l'insertion d'une patte de ladite pièce de verrouillage dans un pontet dudit module lumineux ;
- ladite rotation comprend la rotation selon un axe glissant perpendiculaire à ladite platine support de sorte qu'un corps principal de ladite pièce de verrouillage vienne en butée contre ladite platine support.

Selon un mode de réalisation non limitatif, ledit procédé de montage comprend en outre un verrouillage dudit guide de lumière dans ledit fût de réception au moyen d'une butée de verrouillage dudit fût de réception adapté pour se loger dans un orifice de ladite pièce de verrouillage.

Selon un mode de réalisation non limitatif, le module lumineux est adapté pour un habitacle pour véhicule automobile.

### BREVE DESCRIPTION DES FIGURES

L'invention et ses différentes applications seront mieux comprises à la lecture de la description qui suit et à l'examen des figures qui l'accompagnent.
- la figure 1 représente schématiquement un module lumineux selon un mode de réalisation non limitatif de l'invention, dans lequel on vient introduire un guide de lumière dans un fût de réception dudit module lumineux ;
- la figure 2 représente schématiquement le module lumineux de la figure 1 dans lequel le guide de lumière est positionné dans le fût de réception en regard de la source lumineuse ;
- la figure 3 représente schématiquement le module lumineux de la figure 1 dans lequel on vient insérer par translation une partie d'une pièce de verrouillage dans le fût de réception dudit module lumineux ;
- la figure 4 représente schématiquement le module lumineux de la figure 3 dans lequel la pièce de verrouillage est mise en rotation en direction d'une platine support dudit module lumineux ;
- la figure 5 représente schématiquement le module lumineux de la figure 4 dans lequel le guide de lumière est bloqué dans le fût de réception par la pièce de verrouillage ;
- la figure 6 est une vue en perspective simplifiée d'une partie module lumineux de la figure 5 illustrant le blocage du guide de lumière par des pattes d'appui de la pièce de verrouillage ; et
- la figure 7 est une vue en coupe transversale d'un pontet du module lumineux de la figure 5, ledit pontet coopérant avec une patte d'appui de la pièce de verrouillage.

### DESCRIPTION DE MODES DE REALISATION DE L'INVENTION

Les éléments identiques, par structure ou par fonction, apparaissant sur différentes figures conservent, sauf précision contraire, les mêmes références.

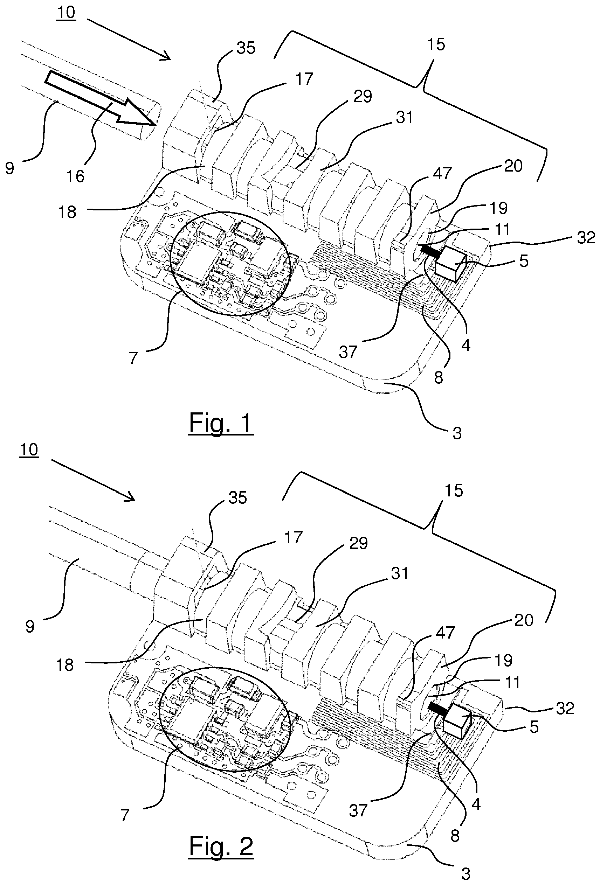

Le module lumineux 10 pour véhicule automobile selon l'invention est décrit en référence aux figures 1 à 7.

Par véhicule automobile, on entend tout type de véhicule motorisé.

Dans des exemples limitatifs, le module lumineux 10 est adapté pour éclairer :
- les portières du véhicule automobile ;
- le plafonnier du véhicule automobile ;
- le tableau de bord du véhicule automobile ;
- la console centrale du véhicule automobile ;
- une zone située sous un siège du véhicule automobile, dans ou sous la boîte à gants ou un vide poche etc.

A cet effet, il est intégré dans ces différents éléments, par exemple dans des garnitures de ces différents éléments.

Dans un mode de réalisation non limitatif pris dans la suite de la description, le module lumineux 10 est un module lumineux 10 pour habitacle pour véhicule automobile qui est utilisé pour l'éclairage intérieur des portières du véhicule automobile.

Tel qu'illustré sur les figures 1 à 5, le module lumineux 10 comprend :
- une platine support 3 ;
- une source lumineuse 5 ;
- un module de pilotage 7 de la source lumineuse 5 ;
- un guide de lumière 9 adapté pour coopérer avec la source lumineuse 5 ;
- un fût de réception 15 du guide de lumière 9 ;
- une pièce de verrouillage 21 adaptée pour bloquer le guide de lumière 9 dans le fût de réception 15.

Dans un mode de réalisation non limitatif, le module lumineux 10 comprend en outre un pontet 35.

Les différents éléments du module lumineux 10 sont décrits en détail ci-après.

### • Platine support

La platine support 3 est adaptée pour supporter les autres éléments du module lumineux 10. Dans un mode de réalisation non limitatif, elle est de forme sensiblement rectangulaire. Elle comporte un plan qui est parallèle à un axe X.

Ainsi, la source lumineuse 5 et le module de pilotage 7 sont disposés sur ladite platine support 3. La platine support 3 reçoit également les composants électroniques nécessaires au bon fonctionnement de la source lumineuse 5 et du module de pilotage 7. Dans l'exemple non limitatif illustré, tous les composants électroniques sont ainsi disposés sur la même face de la platine support. Dans un autre exemple non limitatif, le module de pilotage 7 peut être disposé sur l'autre face.

La platine support 3 comprend également des pistes métalliques 8 adaptées pour assurer l'alimentation électrique des composants électroniques (source lumineuse 5, module de pilotage 7 etc.) et pour véhiculer des commandes du module de pilotage 7 vers la source lumineuse 5. Dans des modes de réalisation non limitatifs, les pistes métalliques 8 sont soudées ou collées à la platine support 3 ou réalisées par impression laser ou par embossage etc. Le fût de réception 15 est quant à lui solidaire de ladite platine support 3. Dans un mode de réalisation non limitatif, la platine support 3 est réalisée dans un matériau plastique. Cela permet d'obtenir une pièce isolante électriquement et relativement légère.

### • Source lumineuse

La source lumineuse 5 est adaptée pour émettre un rayonnement lumineux 4. Cette puissance est suffisante pour l'éclairage intérieur recherché. La puissance du rayonnement lumineux 4 est dans un exemple non limitatif inférieure ou égale à 5 lumens. Dans un exemple non limitatif, le rayonnement lumineux est égal à 3 lumens.

La source lumineuse 5 comprend une zone émettrice du rayonnement lumineux 4 qui est latérale. La zone émettrice peut ainsi être disposée en regard du guide de lumière 9, en particulier en regard de l'extrémité 11 du guide de lumière décrite plus loin.

Dans un mode de réalisation non limitatif, la source lumineuse 7 est une puce émettrice semi-conductrice. Dans une variante de réalisation non limitative, la puce émettrice semi-conductrice fait partie d'une diode électroluminescente. Par diode électroluminescente, on entend tout type de diodes électroluminescentes, que ce soit dans des exemples non limitatifs des LED (« Light Emitting Diode »), une OLED (« Organic LED ») ou une AMOLED (« Active-Matrix-Organic LED »), ou encore une FOLED (« Flexible OLED »).

Dans un mode de réalisation non limitatif, la source lumineuse 5 est une source lumineuse monochromatique ou RGB (pour « Red, Green, Blue » en anglais) ou RGBW (pour pour « Red, Green, Blue, White » en anglais).

### • Module de pilotage

Le module de pilotage 7 (appelé en anglais « driver ») est adapté pour envoyer des commandes de pilotage à la source lumineuse 5 et pour l'alimenter. Dans un mode de réalisation non limitatif, le module de pilotage 7 comprend un microcontrôleur et/ou une pluralité d'interrupteurs pour la génération de ces commandes. Dans un exemple non limitatif, les interrupteurs sont des transistors MOSFET. Un module de pilotage étant connu de l'homme du métier, il n'est pas décrit ici.

Les commandes sont transmises du module de pilotage 7 vers la source lumineuse 5 par l'intermédiaire des pistes métalliques 8. Dans un mode de réalisation non limitatif, les pistes métalliques 8 sont adaptées pour coopérer avec un connecteur bord de carte (appelé en anglais « cardedge ») qui comprend de manière connue de l'homme du métier une mâchoire équipée de contacts adaptés pour entrer en contact avec les pistes métalliques 8 de la platine support 3 de sorte que cette dernière est connectée à un faisceau d'alimentation. Le faisceau d'alimentation électrique permet ainsi de véhiculer la tension d'alimentation qui provient d'un réseau d'alimentation électrique telle qu'une batterie de véhicule automobile et ainsi d'alimenter le module de pilotage 7 via les pistes métalliques 8.

### • Guide de lumière

Le guide de lumière 9 est adapté pour véhiculer le rayonnement lumineux produit par la source lumineuse 5. Dans un mode de réalisation non limitatif, le guide de lumière 9 se présente sous la forme d'un cylindre définissant un couloir d'acheminement de la lumière.

Le guide de lumière 9 est réalisé dans un matériau plastique adapté pour transmettre et réfléchir la lumière. Dans des modes de réalisation non limitatifs, le matériau est un polymère ou une résine acrylique. Dans des variantes non limitatives, le matériau est du poly-méthacrylate de méthyle (pmma) ou du polycarbonate (pc).

Avantageusement, le guide de lumière 9 est souple, c'est-à-dire qu'il est réalisé dans un matériau polymère dont la température de transition vitreuse (Tg) est inférieure à 25°C.

Avantageusement, le guide de lumière 9 est réalisé dans un polymère de silicone transparent ou dans du Polyuréthane transparent. Il présente alors une souplesse relative par rapport à des matériaux thermoplastiques plus rigides comme le PMMA ou le PC.

Le guide de lumière 9 comprend une extrémité 11 disposée en regard de la source lumineuse 5 de sorte que le rayonnement lumineux 4 de ladite source lumineuse 5 pénètre directement dans ledit guide de lumière 9 et est ainsi guidé à travers la matière pour éclairer l'intérieur des portières dans l'exemple non limitatif pris. On rappelle que le guide de lumière 9 comprend des prismes grâce auxquels le rayonnement lumineux 4 est réfléchi dans ledit guide de lumière 9.

Le guide de lumière 9 est adapté pour être inséré dans le fût de réception 15 décrit ci-après.

### • Fût de réception

Le fût de réception 15 est adapté pour recevoir le guide de lumière 9.

Dans un mode de réalisation non limitatif, le fût de réception 15 est solidaire de la platine support 3. On n'a ainsi qu'une seule pièce. Il n'est pas nécessaire d'avoir un procédé de montage et de référencement du fût de réception 15 par rapport à la platine support 3.

Dans un mode de réalisation non limitatif, la platine support 3 et le fût de réception 15 sont réalisés dans un même matériau plastique au cours d'une même opération de réalisation.

Tel qu'illustré sur les figures 1 et 2 par exemple, le fût de réception 15 comprend :
- une première ouverture 17 adaptée pour recevoir le guide de lumière 9 ; et
- une deuxième ouverture 19 par laquelle le guide de lumière 9 débouche de sorte à être en regard de la source lumineuse 5.

La première ouverture 17 se trouve à une première extrémité 18 du fût de réception 15. On insère ainsi le guide de lumière 9 par la première ouverture 17. Le fût de réception 15 est suffisamment large pour que le guide de lumière 9 glisse le long de toute sa longueur.

La deuxième ouverture 19 se trouve ainsi à une deuxième extrémité 20 du fût de réception 15 opposée à la première extrémité 18 du fût de réception 15.

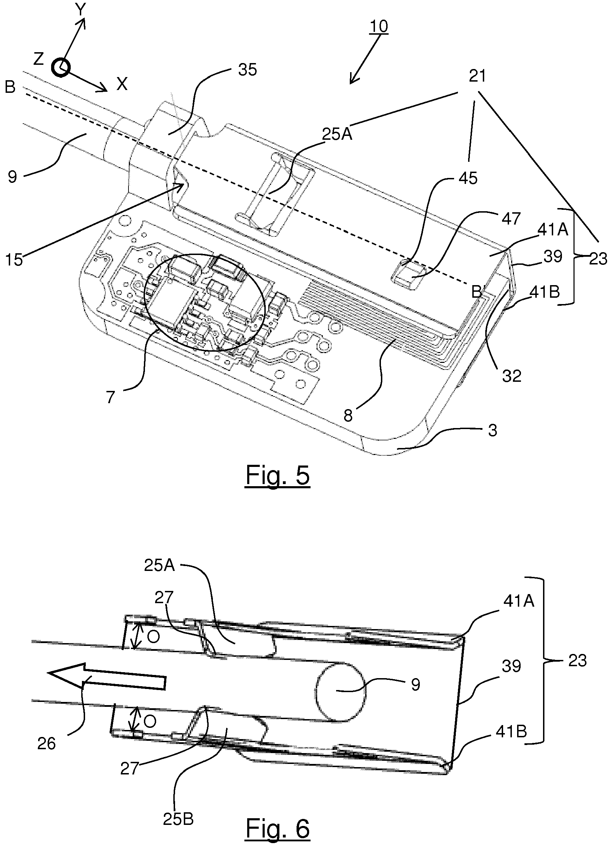

On notera qu'il existe un jeu suffisant O (illustré sur la figure 6) entre les parois internes du fût de réception 15 et le guide de lumière 9, de sorte que l'insertion du guide de lumière 9 dans le fût de réception 15 jusqu'à la source lumineuse 5 est facilitée.

Dans un mode de réalisation non limitatif, l'intérieur du fût de réception 15 est de forme cylindrique et comprend une section constante. L'intérieur correspond ainsi à la forme femelle du guide de lumière 9.

Dans un mode de réalisation non limitatif, le fût de réception 15 comprend au moins une lumière 29 adaptée pour recevoir une languette d'ancrage 25A, 25B appartenant à la pièce de verrouillage 21 décrite plus loin.

Dans un mode de réalisation non limitatif, le fût de réception 15 comprend en outre une pluralité de nervures 31 disposées tout le long du fût de réception 15. Ces nervures 31 permettent de rigidifier le fût de réception 15. Dans un mode de réalisation non limitatif, les nervures 31 ont un profil sensiblement carré. Les nervures facilitent la réalisation par injection du fût de réception 15. Elles évitent en effet d'avoir une trop grosse masse de plastique, ce qui risquerait d'entraîner des problèmes de retassure suite à un retrait de la matière. On économise ainsi de la matière injectée et on réduit le volume de matière. Elles permettent également à la pièce de verrouillage 21 de reposer sur elles puisqu'elles forment un plan avec lequel les parois secondaires 41A et 41B sont en contact lorsque la pièce de verrouillage 21 est en position de verrouillage.

Dans un mode de réalisation non limitatif, le fût de réception 15 comprend en outre un épaulement 37 adapté pour arrêter le guide de lumière 9 à une certaine distance en regard de la source lumineuse 5. L'épaulement 37 se trouve en aval de la deuxième extrémité 20 du fût de réception 15.

### • Pontet

Le pontet 35 est disposé sur ladite platine support 3 en amont du fût de réception 15 et est adapté pour servir d'appui à une patte d'appui 33 (décrite plus loin) de la pièce de verrouillage 21.

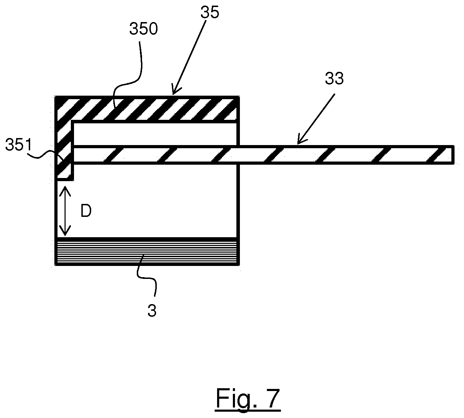

Dans un mode de réalisation non limitatif, le pontet 35 est fermé, à savoir il comporte une face supérieure 350 illustrée sur la figure 7 sans ouverture.

Le pontet 35 qui et fermé limite ainsi le point de débattement perpendiculaire selon l'axe Y (perpendiculaire à l'axe X) de la patte d'appui 33 et empêche la pièce de verrouillage 21 de se relâcher élastiquement.

Tel qu'illustré sur la coupe transversale de la figure 7, le pontet 35 comporte en outre une face verticale 351 sur laquelle la patte d'appui 33 vient en contact lorsqu'elle est insérée dans ledit pontet 35. La face verticale 351 est disposée à une distance D de la platine support 3, la distance D étant adaptée pour laisser passer le guide de lumière 9 sous le pontet 35.

### • Pièce de verrouillage

La pièce de verrouillage 21 est adaptée pour bloquer le guide de lumière 9 dans le fût de réception 15.

La pièce de verrouillage 21 est mobile par rapport au fût de réception 15 entre une position de déverrouillage et une position de blocage. Dans la position de déverrouillage, le guide de lumière 9 peut bouger librement dans le fût de réception15. Dans la position de blocage, le guide de lumière 9 est bloqué dans le fût de réception et ne peut plus bouger.

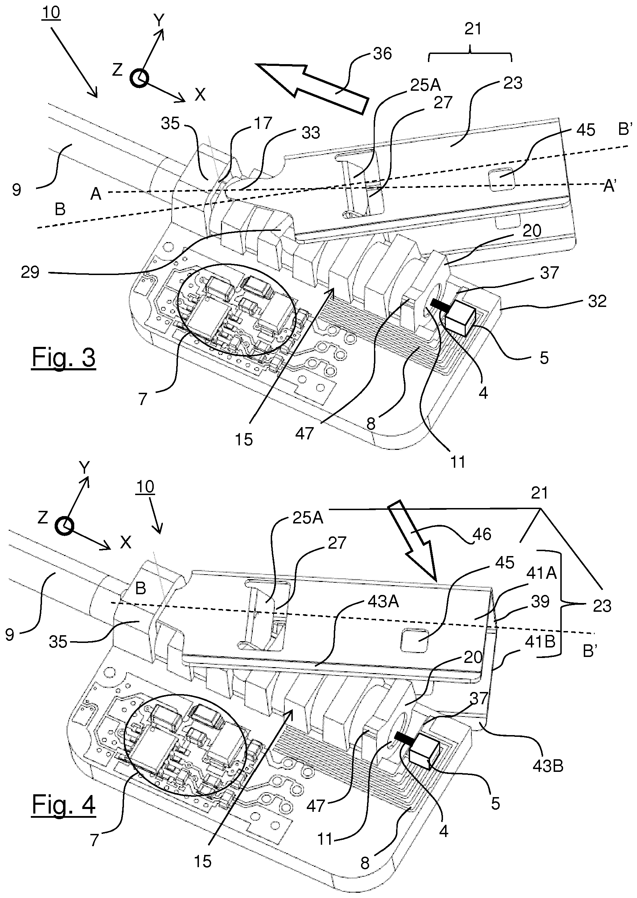

La pièce de verrouillage 21 comprend tel qu'illustré sur les figures 3 à 6 :
- un corps principal 23 ;
- au moins une languette d'ancrage 25A, 25B faisant saillie à partir du corps principal 23 et adaptée pour bloquer le guide de lumière 9 dans ledit fût de réception 15.

Dans un mode de réalisation non limitatif, la pièce de verrouillage 21 est une pièce métallique. La pièce de verrouillage 21 comporte une meilleure résistance que si elle était en plastique. Elle a ainsi moins de risque de se casser. En effet, cela lui permet d'avoir une meilleure élasticité pour le maintien en friction de la patte d'appui 33 (décrite ci-après) sur le guide de lumière 9.

Dans un mode de réalisation non limitatif illustré à la figure 3, la pièce de verrouillage 21 comprend en outre une patte d'appui 33 adaptée pour s'insérer dans le pontet 35 du module lumineux 10. La patte d'appui 33 vient en prolongement du corps principal 23. Elle est adaptée pour s'insérer dans le pontet 35 et pour venir en butée sur le pontet 35, en particulier sur sa face 350. Ainsi, la pièce de verrouillage 21 est une pièce démontable et peut être montée facilement grâce à la patte d'appui 33. On notera que la patte d'appui 33 s'étend le long d'un axe AA' (illustré sur la figure 3) qui est légèrement incliné par rapport à l'axe longitudinal BB' (illustré sur la figure 3) de la pièce de verrouillage 21. Cela facilite l'insertion de la patte d'appui 33 dans le pontet 35. La patte d'appui 33 comporte une extrémité arrondie qui est adaptée pour être en contact avec la face 350 du pontet 35. Le contact, appelé contact linéique, entre l'extrémité arrondie et la face 350 du pontet 35 forme un point de contact qui va glisser le long de ladite face 350 au fur et à mesure de la rotation glissante effectuée par la pièce de verrouillage 21 décrite plus loin.

Dans un mode de réalisation non limitatif illustré aux figures 4 à 6, le corps principal 23 de la pièce de verrouillage 21 comprend :
- une paroi principale 39 ; et
- deux parois secondaires 41A, 4AB disposées de part et d'autre de la paroi principale 39.

La paroi principale 39 est adaptée pour venir en butée contre la platine support 3, en particulier contre un côté 32 de ladite platine support 3. Dans un mode de réalisation non limitatif, la section du corps principal 23 est sensiblement en forme de U ou carrée de sorte à rigidifier l'ensemble de la pièce de verrouillage 21.

Les parois secondaires 41A, 41B sont adaptées pour encadrer la platine support 3. Dans un premier mode de réalisation non limitatif, les deux parois secondaires 41A, 41B du corps principal 39 sont parallèles entre elles. Dans un deuxième mode de réalisation non limitatif, ces deux parois secondaires 41A, 41B convergent de sorte que la distance entre ces deux parois secondaires 41A, 41B au niveau de leur ouverture soit plus faible que la distance mesurée à l'endroit où ces parois secondaires 41A, 41B prennent naissance à partir du corps principal 23, à savoir à leur jonction avec la paroi principale 39. Autrement dit, la distance entre ces deux parois secondaires 41A, 41B au niveau de leur ouverture est plus faible que la largeur de la paroi principale 39.

Dans un mode de réalisation non limitatif, les deux parois secondaires 41A, 41B se prolongent de part et d'autre de la paroi principale 39 de sorte à recouvrir tout ou partie de la platine support 3. La platine support 3 et ses composants (source lumineuse 5, module de pilotage 7 etc.) sont ainsi bien protégés lorsque les deux parois secondaires 41A, 41B recouvrent toute la platine support 3.

Dans un mode de réalisation non limitatif, les parois secondaires 41A, 41B comprennent des extrémités 43A, 43B chanfreinées. L'emboitage de la platine support 3 dans la pièce de verrouillage 21 est ainsi facilitée.

Dans un mode de réalisation non limitatif illustré sur la figure 6, la pièce de verrouillage 21 comprend deux languettes d'ancrage 25A, 25B disposées en regard l'une de l'autre dans le corps principal 23. Ces deux languettes d'ancrage 25A, 25B sont adaptées pour passer respectivement au travers de deux lumières 29 du fût de réception 15. Sur les figures une seule lumière 29 est représentée. Le fait d'avoir deux languettes d'ancrage 25A, 25B permet d'avoir une meilleure répartition du jeu O entre le guide de lumière 9 et l'intérieur du fût de réception 15.

Ces languettes d'ancrage 25A, 25B sont dans le même matériau que le corps principal 23 de la pièce de verrouillage 21, à savoir en métal dans l'exemple non limitatif pris. Elles font saillie à partir du corps principal 23 jusqu'à venir en contact avec le guide de lumière 9 lorsque la pièce de verrouillage 21 est en position de blocage.

Dans un mode de réalisation non limitatif, les languettes d'ancrage 25A, 25B sont inclinées par rapport au corps principal 23. Elles s'écartent ainsi plus facilement lorsqu'elles entrent en contact avec le guide de lumière 9. Cela permet d'assurer un effet ressort qui permet par la suite de pincer ledit guide de lumière 9 lorsque la pièce de verrouillage 21 est en position de verrouillage. Dans un autre mode de réalisation non limitatif, elles peuvent être perpendiculaires au corps principal 23.

Dans un mode de réalisation non limitatif, les languettes d'ancrage 25A, 25B sont élastiquement déformables. Elles permettent ainsi d'épouser la surface du guide de lumière 9 tout en produisant une contrainte sur ledit guide de lumière 9.

Par ailleurs, les languettes d'ancrage 25A, 25B comprennent une arrête saillante 27. On utilise l'arrête saillante 27 du métal pour ancrer les languettes d'ancrage 25A, 25B dans la surface du guide de lumière 9. L'arrête saillante 27 est en contact avec le guide de lumière 9 et s'enfonce légèrement dans la surface du guide de lumière 9 de sorte que les languettes d'ancrage 25A, 25B pincent ledit guide de lumière 9 lorsque la pièce de de verrouillage 21 va venir recouvrir le fût de réception 15. Cela permet de pincer ledit guide de lumière 9 de sorte à empêcher un retrait du guide de lumière 9 hors du fût de réception 15 (mouvement de retrait illustré par le sens de la flèche 26). De cette manière, le blocage du guide de lumière 9 dans le fût de réception 15 est réalisé.

Dans un mode de réalisation non limitatif, le corps principal 23 de la pièce de verrouillage 21 comprend un orifice 45 et ledit fût de réception 15 comprend une butée de verrouillage 47 adaptée pour se loger dans ledit orifice 45. Cet orifice 45 est disposé sur le corps principal 23 à l'opposé de la patte d'appui 33. L'orifice 45 est adapté pour recevoir ladite butée de verrouillage 47 du fût de réception 15. La butée de verrouillage 47 permet ainsi de maintenir la pièce de verrouillage 21 sur le fût de réception 15 selon l'axe X et permet ainsi d'obtenir un verrouillage total.

### • Procédé de montage

Le procédé de montage P du guide de lumière 9 sur la platine support 3 est illustré aux figures 1 à 6.

A la figure 1, on vient insérer le guide de lumière 9 dans le fût de réception 15 tel qu'indiqué par la flèche référencée 16. Le guide de lumière 9 pénètre ainsi à l'intérieur du fût de réception 15 au niveau de la première ouverture 17. Le guide de lumière 9 est ensuite glissé le long du fût de réception 15 jusqu'à l'épaulement 37, comme il est illustré à la figure 2. Dans cette position, le guide de lumière 9 est en regard de la source lumineuse 5, en particulier son extrémité 11. De cette manière, le guide de lumière 9 peut véhiculer les rayons lumineux 4 émis par la source lumineuse 5.

A la figure 3, on insère par translation selon l'axe X une partie de la pièce de verrouillage 21 dans le fût de réception 15 dudit guide de lumière 5. La pièce de verrouillage 21 est dans la position dite de déverrouillage. Le guide de lumière 9 peut être retiré du fût de réception 15.

Dans la position de la figure 3 :
- la patte d'appui 33 prolongeant le corps principal 23 de la pièce de verrouillage 21 est placée en regard du pontet 35 pour y être insérée en partie par un mouvement en translation selon l'axe X de la pièce de verrouillage 21 tel qu'indiqué par la flèche référencée 36 ;
- les parois secondaires 41A, 41B sont placées de part et d'autre de la platine support 3. Après avoir inséré la patte d'appui 33 dans le pontet 35, à la figure 4, on fait tourner la pièce de verrouillage 21 en direction de la platine support 3, à savoir de haut en bas tel qu'indiqué par la flèche référencée 46 sur la figure 4.

En particulier, ladite pièce de verrouillage 21 effectue une rotation en direction de la platine support 3, qui est dite glissante car elle comprend une rotation selon l'axe Z perpendiculaire à la platine support 3 (et donc perpendiculaire à l'axe des X) combinée avec une légère translation selon l'axe X. Autrement dit, la rotation de la pièce de verrouillage 21 est effectuée selon l'axe Z qui est glissant selon l'axe X et perpendiculaire à la platine support 3. A la fin de la rotation glissante, le corps principal de la pièce de verrouillage 21 vient en butée contre ladite platine support 3, en particulier contre un de ses côtés 32.

Comme illustré sur la figure 4, la patte d'appui 33 est insérée dans le pontet 35. Une fois insérée dans le pontet 35, la patte d'appui 33 sert ainsi d'appui pour faire tourner la pièce de verrouillage 21 autour de l'axe Z (qui est glissant). Au cours de cette rotation, la patte d'appui 33 effectue également un mouvement de rotation autour de cet axe Z de sorte à s'insérer complètement dans le pontet 35.

Au cours de cette rotation, les languettes d'ancrage 25A, 25B vont pénétrer dans la lumière 29 du fût de réception 15 et pincer ledit guide de lumière 9 de sorte à bloquer le guide de lumière 9 dans le fût de réception 15 (tel qu'illustré sur la figure 6). La pièce de verrouillage 21 est dans la position dite de blocage tel qu'illustré sur les figures 4 ou 6. Le guide de lumière 9 ne peut être retiré du fût de réception 15.

Enfin, à la figure 5, on verrouille le guide de lumière 9 dans le fût de réception 15 au moyen de la butée de verrouillage 47 qui se loge dans l'orifice 45 de la pièce de verrouillage 21. La pièce de verrouillage 21 est dans une position dite de verrouillage. L'ensemble pièce de verrouillage 21, fût de réception 15, platine support 3 sont verrouillés entre eux. L'axe longitudinal BB' de la pièce de verrouillage 21 est parallèle avec la partie du guide de lumière 9 se trouvant dans le fût de réception 15.

Bien entendu, la description de l'invention n'est pas limitée aux modes de réalisation décrits ci-dessus.

Ainsi, dans un autre mode de réalisation non limitatif, le nombre de languettes d'ancrage 25A, 25B est supérieur à deux.

Ainsi, dans un autre mode de réalisation non limitatif, les languettes d'ancrage 25A, 25B peuvent être décalées entre elles de sorte à pouvoir bloquer le guide de lumière 9 à différents niveaux dans la longueur de ce guide de lumière 9.

Ainsi, dans un autre mode de réalisation non limitatif, le guide de lumière 9 peut être non cylindrique. Dans ce cas, l'intérieur du fût de réception 15 est non cylindrique et adapté à la forme du guide de lumière 9.

Ainsi, dans un autre mode de réalisation non limitatif, le module lumineux 5 est adapté pour un dispositif d'éclairage pour véhicule automobile, ledit dispositif d'éclairage étant adapté pour assurer une fonction photométrique déterminée. Dans un mode de réalisation non limitatif, un tel dispositif d'éclairage est un projecteur avant pour véhicule automobile. Dans des modes de réalisation non limitatifs, la fonction photométrique est :
- une fonction photométrique dite « high beam » pour réaliser un feu de route ; ou
- une fonction photométrique dite « low beam » pour réaliser, par exemple, un feu de croisement.

Ainsi, l'invention décrite présente notamment les avantages suivants :
- on facilite le montage du guide de lumière 9 dans le fût de réception 15 ;
- le blocage du guide de lumière 9 dans le fût de réception est amélioré ;
- on améliore le coût de fabrication du module lumineux 9. Il n'est pas nécessaire d'avoir de contre-formes réalisées dans le guide de lumière 9. Il n'est pas nécessaire d'avoir un procédé dédié pour réaliser des contre-formes.

## Revendications

1. Module lumineux (10) pour véhicule automobile, ledit module lumineux (10) comprenant :
- une platine support (3) ;
- une source lumineuse (5) disposée sur ladite platine support (3) ;
- un module de pilotage (7) de ladite source lumineuse (5) disposé sur ladite platine support (3) ;
- un guide de lumière (9) adapté pour coopérer avec ladite source lumineuse (5) ;
- un fût de réception (15) dudit guide de lumière (9) solidaire de ladite platine support (3) comportant :
- une première ouverture (17) adaptée pour recevoir ledit guide de lumière (9) ;
- au moins une lumière (29) adaptée pour recevoir une languette d'ancrage (25A, 25B) d'une pièce de verrouillage (21) ;
- ladite pièce de verrouillage (21) comportant :
- un corps principal (23) ;
- au moins une languette d'ancrage (25A, 25B) faisant saillie à partir du corps principal (23) et adaptée pour bloquer le guide de lumière (9) dans ledit fût de réception (15),
ledit module lumineux (10) comprenant en outre un pontet (35) disposé sur ladite platine support (3) en amont du fût de réception (15) et adapté pour servir d'appui pour ladite pièce de verrouillage (21)..

2. Module lumineux (10) selon la revendication 1, dans lequel le fût de réception (15) comprend une deuxième ouverture (19) par laquelle le guide de lumière (9) débouche de sorte à être en regard de ladite source lumineuse (5).

3. Module lumineux (10) selon la revendication 1 ou 2, dans lequel la pièce de verrouillage (21) comprend en outre une patte d'appui (33) adaptée pour s'insérer dans ledit pontet (35).

4. Module lumineux (10) selon l'une quelconque des revendications précédentes 1 à 3, dans lequel le fût de réception (15) comprend en outre un épaulement (37) adapté pour arrêter le guide de lumière (9).

5. Module lumineux (10) selon l'une quelconque des revendications précédentes 1 à 4, dans lequel la pièce de verrouillage (21) comprend deux languettes d'ancrage (25A, 25B) disposées en regard l'une de l'autre dans le corps principal (23).

6. Module lumineux (10) selon l'une quelconque des revendications précédentes 1 à 5, dans lequel ladite au moins une languette d'ancrage (25A, 25B) est élastiquement déformable.

7. Module lumineux (10) selon l'une quelconque des revendications précédentes 1 à 6, dans lequel le fût de réception (15) comprend en outre une pluralité de nervures (31).

8. Module lumineux (10) selon l'une quelconque des revendications précédentes 1 à 7, dans lequel la platine support (3) et le fût de réception (15) sont réalisés dans un matériau plastique.

9. Module lumineux (10) selon l'une quelconque des revendications précédentes 1 à 8, dans lequel la pièce de verrouillage (21) est une pièce métallique.

10. Module lumineux (10) selon l'une quelconque des revendications précédentes 1 à 9, dans lequel le corps principal (23) de la pièce de verrouillage (21) comprend :
- une paroi principale (39) adaptée pour venir en butée contre la platine support (3) ; et
- deux parois secondaires (41A, 41B) disposées de part et d'autre de la paroi principale (39) et adaptées pour encadrer ladite platine support (3).

11. Module lumineux (10) selon la revendication 10, dans lequel les deux parois secondaires (41A, 41B) du corps principal (39) sont convergentes.

12. Module lumineux (10) selon la revendication 10 ou la revendication 11, dans lequel les deux parois secondaires (41A, 41B) se prolongent de part et d'autre de la paroi principale (39) de sorte à recouvrir tout ou partie de ladite platine support (3).

13. Module lumineux (10) selon l'une quelconque des revendications précédentes 11 à 12, dans lequel les parois secondaires (41A, 41B) comprennent des extrémités (43A, 43B) chanfreinées.

14. Module lumineux (10) selon l'une quelconque des revendications précédentes 1 à 13, dans lequel :
- ledit corps principal (23) de ladite pièce de verrouillage (21) comprend un orifice (45) ; et
- ledit fût de réception (15) comprend une butée de verrouillage (47) adaptée pour se loger dans ledit orifice (45).

## Patentansprüche

1. Leuchtmodul (10) für ein Kraftfahrzeug, wobei das besagte Leuchtmodul (10) umfasst:
- eine Trägerplatte (3);
- eine Lichtquelle (5), die auf der Trägerplatte (3) angeordnet ist;
- ein Modul (7) zum Betreiben der Lichtquelle (5), das auf der Trägerplatte (3) angeordnet ist;
- einen Lichtleiter (9), der mit der Lichtquelle (5) zusammenwirken kann;
- einen Aufnahmeschaft (15) für den Lichtleiter (9), der fest mit der Trägerplatte (3) verbunden ist, mit
- eine erste Öffnung (17), die zur Aufnahme des Lichtleiters (9) geeignet ist;
- mindestens einen Schlitz (29), der zur Aufnahme einer Verankerungszunge (25A, 25B) eines Verriegelungselements (21) geeignet ist;
- wobei das Verriegelungselement (21) umfasst:
- ein Hauptkörper (23);
- mindestens eine Verankerungszunge (25A, 25B), die von dem Hauptkörper (23) vorsteht
und dazu geeignet ist, den Lichtleiter (9) in dem Aufnahmeschaft (15) zu verriegeln, das Lichtmodul (10) außerdem einen Auslöseschutz (35) aufweist, der auf der Trägerplatte (3) stromaufwärts des Aufnahmeschafts (15) angeordnet und geeignet ist, als Träger für das Verriegelungselement (21) zu dienen.

2. Leuchtmodul (10) nach Anspruch 1, bei dem der Aufnahmeschaft (15) eine zweite Öffnung (19) aufweist, durch die der Lichtleiter (9) so mündet, dass er der Lichtquelle (5) zugewandt ist.

3. Leuchtmodul (10) nach Anspruch 1 oder 2, bei dem der Verriegelungselement (21) ferner einen Tragansatz (33) aufweist, der in den Auslöseschutz (35) einsetzbar ist.

4. Leuchtmodul (10) nach einem der vorstehenden Ansprüche 1 bis 3, wobei der Aufnahmeschaft (15) ferner eine Schulter (37) aufweist, die geeignet ist, den Lichtleiter (9) anzuhalten.

5. Leuchtmodul (10) nach einem der vorstehenden Ansprüche 1 bis 4, wobei das Verriegelungselement (21) zwei Verankerungszungen (25A, 25B) aufweist, die einander gegenüberliegend im Hauptkörper (23) angeordnet sind.

6. Leuchtmodul (10) nach einem der vorstehenden Ansprüche 1 bis 5, wobei die mindestens eine Verankerungszunge (25A, 25B) elastisch verformbar ist.

7. Leuchtmodul (10) nach einem der vorstehenden Ansprüche 1 bis 6, wobei der Aufnahmeschacht (15) ferner eine Vielzahl von Rippen (31) aufweist.

8. Leuchtmodul (10) nach einem der vorstehenden Ansprüche 1 bis 7, wobei die Trägerplatte (3) und der Aufnahmeschacht (15) aus einem Kunststoffmaterial hergestellt sind.

9. Leuchtmodul (10) nach einem der vorstehenden Ansprüche 1 bis 8, wobei das Verriegelungselement (21) ein Metallteil ist.

10. Leuchtmodul (10) nach einem der vorstehenden Ansprüche 1 bis 9, wobei der Hauptkörper (23) des Verriegelungselement (21) umfasst:
- eine Hauptwand (39), die an die Trägerplatte (3) anstoßen kann; und
- zwei sekundäre Wände (41A, 41B), die auf beiden Seiten der Hauptwand (39) angeordnet sind und die besagte Trägerplatte (3) einrahmen können.

11. Leuchtmodul (10) nach Anspruch 10, wobei die beiden Sekundärwände (41A, 41B) der Hauptwand (39) konvergent sind.

12. Leuchtmodul (10) nach Anspruch 10 oder 11, bei dem sich die beiden Sekundärwände (41A, 41B) auf beiden Seiten der Hauptwand (39) erstrecken, so dass sie die genannte Trägerplatte (3) ganz oder teilweise bedecken.

13. Leuchtmodul (10) nach einem der vorstehenden Ansprüche 11 bis 12, wobei die Sekundärwände (41A, 41B) abgeschrägte Enden (43A, 43B) aufweisen.

14. Leuchtmodul (10) nach einem der vorstehenden Ansprüche 1 bis 13, wobei:
- der Hauptkörper (23) des Verriegelungselement (21) ein Loch (45) aufweist; und
- der Aufnahmeschaft (15) einen Verriegelungsanschlag (47) aufweist, der in das Loch (45) passt.

## Claims

1. A luminous module (10) for a motor vehicle, said luminous module (10) comprising :
- a support plate (3);
- a light source (5) disposed on said support plate (3);
- a control module (7) for said light source (5) arranged on said support plate (3);
- a light guide (9) adapted to cooperate with said light source (5);
- a reception shaft (15) for said light guide (9) integral with said support plate (3) comprising :
- a first opening (17) adapted to receive said light guide (9);
- at least one slot (29) adapted to receive an anchoring tongue (25A, 25B) of a locking part (21);
- said locking piece (21) comprising :
- a main body (23);
- at least one anchoring tongue (25A, 25B) projecting from the main body (23) and adapted to block the light guide (9) in said receiving barrel (15),
said light module (10) further comprising a jumper (35) disposed on said support plate (3) upstream of the reception barrel (15) and adapted to serve as a support for said locking piece (21) .

2. Luminous module (10) according to claim 1, in which the reception shaft (15) comprises a second opening (19) through which the light guide (9) opens out so as to face said light source (5).

3. Luminous module (10) according to claim 1 or 2, in which the locking part (21) further comprises a support lug (33) adapted to be inserted into the said jumper (35).

4. A luminous module (10) according to any one of the preceding claims 1 to 3, wherein the receiving shaft (15) further comprises a shoulder (37) adapted to stop the light guide (9).

5. A luminous module (10) according to any one of the preceding claims 1 to 4, wherein the locking piece (21) comprises two anchoring tongues (25A, 25B) disposed opposite to each other in the main body (23).

6. A luminous module (10) according to any one of the preceding claims 1 to 5, wherein said at least one anchoring tongue (25A, 25B) is elastically deformable.

7. A luminous module (10) according to any of the preceding claims 1 to 6, wherein the receiving shaft (15) further comprises a plurality of ribs (31).

8. A luminous module (10) according to any one of the preceding claims 1 to 7, wherein the support plate (3) and the receiving shaft (15) are made of plastic material.

9. A luminous module (10) according to any one of the preceding claims 1 to 8, in which the locking part (21) is a metal part.

10. A luminous module (10) according to any one of the preceding claims 1 to 9, wherein the main body (23) of the locking piece (21) comprises :
- a main wall (39) adapted to abut against the support plate (3); and
- two secondary walls (41A, 41B) arranged on either side of the main wall (39) and adapted to frame said support plate (3).

11. A luminous module (10) according to claim 10, in which the two secondary walls (41A, 41B) of the main body (39) are convergent.

12. A luminous module (10) according to claim 10 or claim 11, in which the two secondary walls (41A, 41B) extend on either side of the main wall (39) so as to cover all or part of said support plate (3).

13. A luminous module (10) according to any of the preceding claims 11 to 12, in which the secondary walls (41A, 41B) comprise chamfered ends (43A, 43B).

14. A luminous module (10) according to any of the preceding claims 1 to 13, wherein :
- said main body (23) of said locking piece (21) includes a hole (45); and
- said receiving barrel (15) includes a locking stop (47) adapted to fit into said hole (45).
